# EUROPEAN PATENT APPLICATION

(11) **EP 4 380 210 A1**
(43) Date of publication of application: **05.06.2024**
(21) Application number: 21951302.5
(22) Date of filing: 29.07.2021
(51) Int. Cl.: H04W 8/24

(54) **MEASUREMENT RELAXATION MECHANISM-BASED COMMUNICATION METHOD AND APPARATUS, AND STORAGE MEDIUM**

(71) Applicant: Beijing Xiaomi Mobile Software Co., Ltd., Beijing 100085 (CN)
(72) Inventor: SHI, Rao, Beijing 100085 (CN); LI, Yanhua, Beijing 100085 (CN)
(74) Representative: Gunzelmann, Rainer
(86) International application number: PCT/CN2021/109313
(87) International publication number: WO 2023/004695

(57) **Abstract**

The present disclosure relates to a measurement relaxation mechanism-based communication method and apparatus, and a storage medium. The measurement relaxation mechanism-based communication method is applied to a terminal and comprises: determining measurement relaxation capability information, the measurement relaxation capability information being used for indicating the RRM measurement relaxation capability supported by the terminal. The present disclosure achieves the RRM measurement relaxation-based terminal capability determination. On the basis of the RRM measurement relaxation capability, the terminal can adapt to the capabilities thereof to perform RRM measurement relaxation flexibly, thereby providing more flexibility.

## Description

### TECHNICAL FIELD

The present disclosure relates to the field of communication technology, and more particularly to a communication method and apparatus based on a measurement relaxation mechanism, and a storage medium.

### BACKGROUND

In a mobile communication system, movement of a terminal causes channel conditions around the terminal to change constantly. In order to support the mobility of the terminal and obtain the current cell channel condition of the terminal timely, a network will configure a radio resource management (RRM) measurement for the terminal to measure a signal quality of a current serving cell and neighboring cells of the terminal. However, excessive RRM measurements will increase power consumption of the terminal and reduce battery life. For this reason, in a Rel-16 version, a new radio (NR) introduces an RRM measurement relaxation mechanism for the terminal in an idle state. That is, when the terminal is at a low mobility or/and a non-cell edge, it is considered that the terminal is unlikely to suffer from cell reselection/handover, so the terminal is allowed to perform an RRM measurement relaxation to a certain extent, such as extending a measurement period or stopping a measurement on the neighboring cells, to reduce the power consumption.

In the related art, for a terminal to perform the RRM measurement relaxation, the terminal needs to have a terminal capability for performing the RRM measurement relaxation mechanism and has been configured with an RRM measurement relaxation criterion. For a terminal of a Rel-17 version, the RRM measurement relaxation may be performed in the idle state, but the measurement relaxation has certain risks, and an improper relaxation will cause the terminal to be unable to obtain the signal quality of the neighboring cells timely, affecting the performance of the cell reselection/handover, and reducing user experiences. Therefore, it is a hot research topic to provide a new communication method based on the measurement relaxation mechanism to enable the terminal to flexibly support the RRM measurement relaxation and to have more flexibility.

### SUMMARY

In order to overcome problems existing in the related art, the present disclosure provides a communication method and apparatus based on a measurement relaxation mechanism, and a storage medium.

According to a first aspect of embodiments of the present disclosure, a communication method based on a measurement relaxation mechanism is provided, which is performed by a terminal and includes: determining measurement relaxation capability information. The measurement relaxation capability information is configured to indicate a radio resource management (RRM) measurement relaxation capability that the terminal supports to use.

In an embodiment, the RRM measurement relaxation capability includes one of:
supporting all measurement relaxation criteria;
supporting a non-cell edge criterion;
supporting a low mobility criterion;
supporting a stationary criterion;
supporting a non-cell edge criterion and/or supporting a low mobility criterion;
supporting a non-cell edge criterion and/or supporting a stationary criterion;
supporting a non-cell edge criterion, and/or supporting a low mobility criterion and/or a stationary criterion; or
not supporting any measurement relaxation criterion.

In an embodiment, the measurement relaxation capability information is configured to indicate the RRM measurement relaxation capability that the terminal supports to use in a connected state.

In an embodiment, the method further includes: reporting the measurement relaxation capability information.

In an embodiment, reporting the measurement relaxation capability information includes:
reporting the measurement relaxation capability information via a terminal radio capability message; or
reporting the measurement relaxation capability information via initialization assistance information; or
reporting the measurement relaxation capability information via message 5 in a radio resource control connection setup process or a radio resource control connection resume process; or
reporting the measurement relaxation capability information via message 3 in a radio resource control connection setup process or a radio resource control connection resume process.

In an embodiment, the measurement relaxation capability information is configured to indicate the RRM measurement relaxation capability that the terminal supports to use in a non-connected state.

In an embodiment, the method further includes: obtaining measurement relaxation parameters configured by a network device.

In an embodiment, the measurement relaxation capability information is configured to indicate the RRM measurement relaxation capability that the terminal supports to use in the connected state, and obtaining the measurement relaxation parameters configured by the network device includes: obtaining the measurement relaxation parameters corresponding to the measurement relaxation capability information configured by the network device via a radio control resource dedicated signaling.

In an embodiment, obtaining the measurement relaxation parameters configured by the network device includes: obtaining the measurement relaxation parameters configured by the network device based on a system broadcast message broadcasted by the network device, and determining the measurement relaxation parameters corresponding to the measurement relaxation capability information from the measurement relaxation parameters configured.

In an embodiment, the method further includes: in response to determining that the terminal supports to use an RRM measurement relaxation, performing the RRM measurement relaxation based on the measurement relaxation parameters in the connected state.

In an embodiment, the method further includes: in response to determining that the terminal supports to use an RRM measurement relaxation, performing the RRM measurement relaxation based on the measurement relaxation parameters in the non-connected state.

In an embodiment, the method further includes: in response to determining that the terminal does not support to use an RRM measurement relaxation, and/or determining that measurement relaxation parameters are not obtained, not performing the RRM measurement relaxation.

According to a second aspect of embodiments of the present disclosure, a communication method based on a measurement relaxation mechanism is provided, which is performed by a network device and includes: obtaining measurement relaxation capability information reported by a terminal. The measurement relaxation capability information is configured to indicate a radio resource management (RRM) measurement relaxation capability that the terminal supports to use in a connected state.

In an embodiment, the RRM measurement relaxation capability includes one of:
supporting all measurement relaxation criteria;
supporting a non-cell edge criterion;
supporting a low mobility criterion;
supporting a stationary criterion;
supporting a non-cell edge criterion and/or supporting a low mobility criterion;
supporting a non-cell edge criterion and/or supporting a stationary criterion;
supporting a non-cell edge criterion, and/or supporting a low mobility criterion and/or a stationary criterion; or
not supporting any measurement relaxation criterion.

In an embodiment, obtaining the measurement relaxation capability information reported by the terminal includes:
obtaining the measurement relaxation capability information reported by the terminal based on a terminal radio capability message; or
obtaining the measurement relaxation capability information reported by the terminal based on initialization assistance information; or
obtaining the measurement relaxation capability information reported by the terminal based on message 5 in a radio resource control connection setup process or a radio resource control connection resume process; or
obtaining the measurement relaxation capability information reported by the terminal based on message 3 in a radio resource control connection setup process or a radio resource control connection resume process.

In an embodiment, the method further includes: sending measurement relaxation parameters.

In an embodiment, sending the measurement relaxation parameters includes: sending the measurement relaxation parameters corresponding to the measurement relaxation capability information configured by the network device via a radio control resource dedicated signaling.

In an embodiment, sending the measurement relaxation parameters includes: sending the measurement relaxation parameters configured by the network device via a system broadcast message broadcasted by the network device.

According to a third aspect of embodiments of the present disclosure, a communication apparatus based on a measurement relaxation mechanism is provided, which includes: a processing unit configured to determine measurement relaxation capability information. The measurement relaxation capability information is configured to indicate a radio resource management (RRM) measurement relaxation capability that the terminal supports to use.

In an embodiment, the RRM measurement relaxation capability includes one of:
supporting all measurement relaxation criteria;
supporting a non-cell edge criterion;
supporting a low mobility criterion;
supporting a stationary criterion;
supporting a non-cell edge criterion and/or supporting a low mobility criterion;
supporting a non-cell edge criterion and/or supporting a stationary criterion;
supporting a non-cell edge criterion, and/or supporting a low mobility criterion and/or a stationary criterion; or
not supporting any measurement relaxation criterion.

In an embodiment, the measurement relaxation capability information is configured to indicate the RRM measurement relaxation capability that the terminal supports to use in a connected state.

In an embodiment, the measurement relaxation capability information is configured to indicate the RRM measurement relaxation capability that the terminal supports to use in the connected state. The communication apparatus based on the measurement relaxation mechanism further includes a reporting unit configured to: report the measurement relaxation capability information.

In an embodiment, the reporting unit is configured to report the measurement relaxation capability information in following manners:
reporting the measurement relaxation capability information via a terminal radio capability message; or
reporting the measurement relaxation capability information via initialization assistance information; or
reporting the measurement relaxation capability information via message 5 in a radio resource control connection setup process or a radio resource control connection resume process; or
reporting the measurement relaxation capability information via message 3 in a radio resource control connection setup process or a radio resource control connection resume process.

In an embodiment, the measurement relaxation capability information is configured to indicate the RRM measurement relaxation capability that the terminal supports to use in a non-connected state.

In an embodiment, the communication apparatus based on the measurement relaxation mechanism further includes an obtaining unit. The obtaining unit is configured to: obtain measurement relaxation parameters configured by a network device.

In an embodiment, the measurement relaxation capability information is configured to indicate the RRM measurement relaxation capability that the terminal supports to use in the connected state. The obtaining unit is configured to obtain the measurement relaxation parameters corresponding to the measurement relaxation capability information configured by the network device based on a radio control resource dedicated signaling.

In an embodiment, the obtaining unit is configured to: obtain the measurement relaxation parameters configured by the network device based on a system broadcast message broadcasted by the network device, and determine the measurement relaxation parameters corresponding to the measurement relaxation capability information from the measurement relaxation parameters configured.

In an embodiment, the processing unit is further configured to: in response to determining that the terminal supports to use an RRM measurement relaxation, perform the RRM measurement relaxation based on the measurement relaxation parameters in the connected state.

In an embodiment, the processing unit is further configured to: in response to determining that the terminal supports to use an RRM measurement relaxation, perform the RRM measurement relaxation based on the measurement relaxation parameters in the non-connected state.

In an embodiment, the processing unit is further configured to: in response to determining that the terminal does not support to use an RRM measurement relaxation, and/or determining that measurement relaxation parameters are not obtained, not perform the RRM measurement relaxation.

According to a fourth aspect of embodiments of the present disclosure, a communication apparatus based on a measurement relaxation mechanism is provided, which is applied to a network device and includes: an obtaining unit configured to obtain measurement relaxation capability information reported by a terminal. The measurement relaxation capability information is configured to indicate a radio resource management (RRM) measurement relaxation capability that the terminal supports to use in a connected state.

In an embodiment, the RRM measurement relaxation capability includes one of:
supporting all measurement relaxation criteria;
supporting a non-cell edge criterion;
supporting a low mobility criterion;
supporting a stationary criterion;
supporting a non-cell edge criterion and/or supporting a low mobility criterion;
supporting a non-cell edge criterion and/or supporting a stationary criterion;
supporting a non-cell edge criterion, and/or supporting a low mobility criterion and/or a stationary criterion; or
not supporting any measurement relaxation criterion.

In an embodiment, the obtaining unit is configured to: obtain the measurement relaxation capability information reported by the terminal based on a terminal radio capability message; or obtain the measurement relaxation capability information reported by the terminal based on initialization assistance information; or obtain the measurement relaxation capability information reported by the terminal based on message 5 in a radio resource control connection setup process or a radio resource control connection resume process; or obtain the measurement relaxation capability information reported by the terminal based on message 3 in a radio resource control connection setup process or a radio resource control connection resume process.

In an embodiment, the communication apparatus based on the measurement relaxation mechanism further includes a sending unit. The sending unit is configured to: send measurement relaxation parameters.

In an embodiment, the sending unit is configured to send the measurement relaxation parameters corresponding to the measurement relaxation capability information configured by the network device via a radio control resource dedicated signaling.

In an embodiment, the sending unit is configured to send the measurement relaxation parameters configured by the network device via a system broadcast message broadcasted by the network device.

According to a fifth aspect of embodiments of the present disclosure, a communication device based on a measurement relaxation mechanism is provided, which includes: a processor; and a memory configured to store a processor-executable instruction. The processor is configured to: perform the communication method based on the measurement relaxation mechanism as described in the first aspect or in any embodiment of the first aspect.

According to a sixth aspect of embodiments of the present disclosure, a communication device based on a measurement relaxation mechanism is provided, which includes: a processor; and a memory configured to store a processor-executable instruction. The processor is configured to: execute the communication method based on the measurement relaxation mechanism as described in the second aspect or in any embodiment of the second aspect.

According to a seventh aspect of embodiments of the present disclosure, a storage medium is provided. The storage medium has stored therein instructions that, when executed by a processor of a terminal, cause the terminal to perform the communication method based on the measurement relaxation mechanism as described in the first aspect or in any embodiment of the first aspect.

According to an eighth aspect of embodiments of the present disclosure, a storage medium is provided. The storage medium has stored therein instructions that, when executed by a processor of a network device, cause the network device to perform the communication method based on the measurement relaxation mechanism as described in the second aspect or in any embodiment of the second aspect.

The technical solutions according to embodiments of the present disclosure may include following advantageous effects. The terminal determines the measurement relaxation capability information, which is configured to indicate the RRM measurement relaxation capability that the terminal supports to use, thereby achieving the determination of the terminal capability based on the RRM measurement relaxation. Based on the RRM measurement relaxation capability, the terminal may flexibly perform the RRM measurement relaxation according to its own capability. Therefore, embodiments of the present disclosure provide more flexibility.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram showing a wireless communication system according to an illustrative embodiment.
FIG. 2 is a schematic flowchart showing a communication method based on a measurement relaxation mechanism according to an illustrative embodiment.
FIG. 3 is a schematic flowchart showing a communication method based on a measurement relaxation mechanism according to an illustrative embodiment.
FIG. 4 is a schematic flowchart showing a communication method based on a measurement relaxation mechanism according to an illustrative embodiment.
FIG. 5 is a schematic flowchart showing a communication method based on a measurement relaxation mechanism according to an illustrative embodiment.
FIG. 6 is a schematic flowchart showing a communication method based on a measurement relaxation mechanism according to an illustrative embodiment.
FIG. 7 is a schematic block diagram showing a communication apparatus based on a measurement relaxation mechanism according to an illustrative embodiment.
FIG. 8 is a schematic block diagram showing a communication apparatus based on a measurement relaxation mechanism according to an illustrative embodiment.
FIG. 9 is a schematic block diagram showing a communication device for a measurement relaxation mechanism according to an illustrative embodiment.
FIG. 10 is a schematic block diagram showing a communication device for a measurement relaxation mechanism according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of devices and methods consistent with some aspects of the present disclosure.

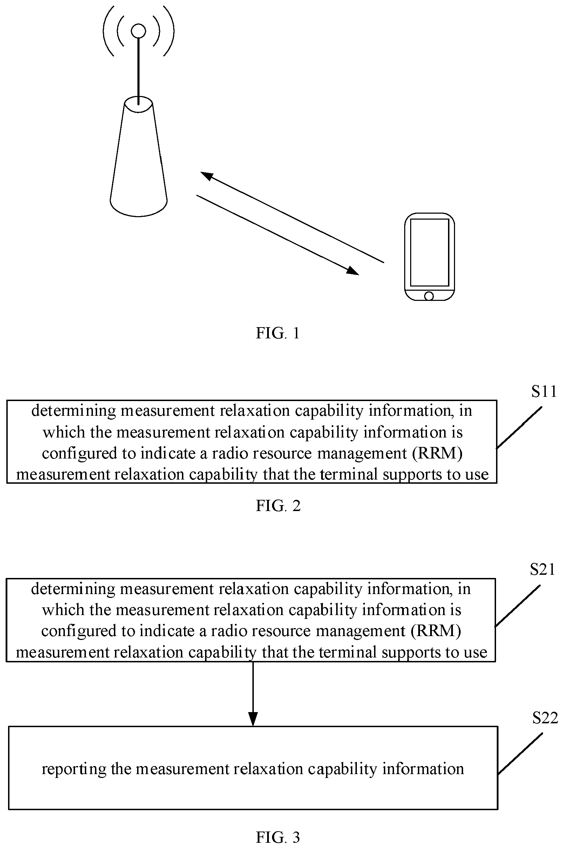

A communication method based on a measurement relaxation mechanism according to embodiments of the present disclosure may be applied to a wireless communication system shown in FIG. 1. Referring to FIG. 1, the wireless communication system includes a terminal and a network device. Information is sent and received between the terminal and the network device via a radio resource.

It may be understood that the wireless communication system shown in FIG. 1 is only illustrative. The wireless communication system may also include other network devices, such as a core network device, a wireless relay device, and a wireless backhaul device, which are not shown in FIG 1. The number of network devices and the number of terminals included in the wireless communication system are not limited in embodiments of the present disclosure.

It may be further understood that the wireless communication system in embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), or carrier sense multiple access with collision avoidance. The network may be classified into a 2nd generation (2G) network, a 3G network, a 4G network, or a future evolution network, such as a 5G network, which may also be referred to as a new radio (NR) network, according to the capacity, rate, delay and other factors of different networks. For ease of description, the wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP) or the like, or may also be a gNB in an NR system, or may also be a component or a part of a device that constitutes a base station, etc. The network device may also be a vehicle-mounted device when it is used in a vehicle to everything (V2X) communication system. It is to be understood that the specific technology and specific device form adopted by the network device are not limited in embodiments of the present disclosure.

Further, the terminal involved in the present disclosure, also referred to as a terminal device, a user equipment (UE), a mobile station (MS), a mobile terminal (MT), etc., is a device that provides voice and/or data connectivity to a user. For example, the terminal may be a handheld device, a vehicle-mounted device, or the like that has a wireless connection function. At present, some examples of the terminal are a smart phone (a mobile phone), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in embodiments of the present disclosure.

In the related art, in order to reduce the power consumption of the terminal, in a Rel-16 version, an RRM measurement relaxation mechanism is introduced for terminals in an idle state. In the measurement relaxation mechanism, communications are performed mainly based on a measurement relaxation criterion. In the related art, the measurement relaxation criterion includes a non-cell edge criterion, a low mobility criterion, and a stationary criterion.

The low mobility criterion refers to that if a difference between a reference received signal strength (S_{rxlevRef}) and a signal strength (Sᵣₓₗₑᵥ) of a current serving cell of the terminal is less than a preset threshold value (S_{SearchDeltaP}) within a certain time (T_{SearchDeltaP}), indicating that a signal of the terminal does not change greatly, it is considered that the terminal is currently in a low mobility state. The parameters S_{SearchDeltaP} and T_{SearchDeltaP} are provided by the network, and formulas are specified by a protocol.

The non-cell edge criterion mainly refers to that: if a received signal strength (Sᵣₓₗₑᵥ) of the current serving cell of the terminal is greater than a preset threshold value (S_{searchThresholdP}), and a received signal quality (S_{qual}) (if configured) is greater than a preset threshold value (S_{searchThresholdQ}), it is considered that the terminal is not at an edge of the cell. S_{searchThresholdP} and S_{searchThresholdQ} are configured by the network, and the formulas are specified by a protocol.

The stationary criterion mainly refers to that: if a difference between a signal reception strength (Sᵣₓₗₑᵥ) of the current serving cell of the terminal and a reference signal reception strength (S_{rxlevRef}) is less than a preset threshold value (S_{SearchDeltaP_stationary}) within a certain time (T_{SearchDeltaP_stationary}), and a number of beam switching times of the terminal (if configured) is less than a threshold value (N_{beam_switching}) within the certain time, it is considered that the signal of the terminal does not change greatly, and no beam switching occurs, and the terminal is considered to be in a stationary state. The parameters T_{SearchDeltaP_}stationary, SsearchDeltaP stationary, and N_{beam_}switching are provided by the network, and the formulas are specified by a protocol.

Currently, in a Rel-17 version of3GPP, it is considered to further research the RRM measurement relaxation under a reduced-capability (RedCap) device type, and it is considered to introduce a more advanced measurement relaxation criterion-stationary criterion, and introduce the RRM measurement relaxation into a connected state. Furthermore, after the design of the RRM measurement relaxation of the RedCap device of the Rel-17 version is completed, it is highly likely to be introduced for use in an enhanced mobile broadband (eMBB) device (a conventional terminal, such as a mobile phone) in an NR.

However, for a terminal of the Rel-17 version, the above three criteria may be used to perform the RRM measurement relaxation, but the measurement relaxation has certain risks, and an improper relaxation will cause the terminal to be unable to obtain the signal quality of the neighboring cells timely, affecting the performance of the cell reselection/handover, and reducing user experiences. Furthermore, whether to perform the RRM measurement relaxation depends more on implementations of terminals, for example, some terminals want to turn on a power saving mode, while some terminals care about the maximization of the performance without considering the power consumption. To sum up, whether the terminal performs the measurement relaxation depends on various implementations.

In view of the above, the present disclosure provides a new communication method based on a measurement relaxation mechanism. In the method, a terminal capability for the RRM measurement relaxation (hereinafter referred to as the measurement relaxation capability) is introduced, so that the terminal may flexibly support the RRM measurement relaxation and have more flexibility.

FIG. 2 is a schematic flowchart showing a communication method based on a measurement relaxation mechanism according to an illustrative embodiment. The communication method based on the measurement relaxation mechanism may be performed alone or in combination with other embodiments of the present disclosure. As shown in FIG. 2, the communication method based on the measurement relaxation mechanism is performed by a terminal and includes a following step.

In step S11, measurement relaxation capability information is determined. The measurement relaxation capability information is configured to indicate a radio resource management (RRM) measurement relaxation capability that the terminal supports to use.

In embodiments of the present disclosure, the measurement relaxation capability information may be understood as being used to indicate whether the terminal has a capability to perform an RRM measurement relaxation in a non-connected state or a connected state.

The measurement relaxation capability may also be understood as whether a measurement relaxation criterion is supported, that is, the measurement relaxation capability information determined by the terminal may be used to indicate whether the terminal supports an RRM measurement relaxation criterion in the non-connected state or the connected state.

In embodiments of the present disclosure, the measurement relaxation capability of the terminal may include, but is not limited to, following types of measurement relaxation criteria:
a. supporting all measurement relaxation criteria, which may also be understood as the situation of the traditional technology, in which only an indication of whether a measurement relaxation is supported is given, without distinguishing specific measurement relaxation criteria;
b. supporting a non-cell edge criterion;
c. supporting a low mobility criterion;
d. supporting a stationary criterion;
e. supporting a non-cell edge criterion and/or supporting a low mobility criterion;
f. supporting a non-cell edge criterion and/or supporting a stationary criterion;
g. supporting a non-cell edge criterion, and/or supporting a low mobility criterion and/or a stationary criterion; or
h. not supporting any measurement relaxation criterion, that is, the terminal does not belong to a type that supports the measurement relaxation capability.

It may be understood that the non-cell edge criterion, the low mobility criterion and the stationary criterion involved in embodiments of the present disclosure may refer to the non-cell edge criterion, the low mobility criterion and the stationary criterion involved in the aforementioned embodiments of the related art, which will not be described in detail here.

Further, in embodiments of the present disclosure, the measurement relaxation capability information determined by the terminal may indicate different radio resource control (RRC) states, including:
a. indicating a connected state, which may be understood as indicating the RRM measurement relaxation capability that the terminal supports to use in the connected state, and in this case, the terminal may interact with a network device, for example, the terminal reports the measurement relaxation capability information to the network device, or the terminal does not need to report the measurement relaxation capability information to the network device;
b. indicating a non-connected state, which may be understood as that the terminal determines and performs the measurement relaxation by itself, and there is no need to report the measurement relaxation capability information to the network device.

In an implementation, embodiments of the present disclosure where the measurement relaxation capability information is configured to indicate the RRM measurement relaxation capability that the terminal supports to use in the connected state will be described first.

In embodiments of the present disclosure, in case that the measurement relaxation capability information is configured to indicate the RRM measurement relaxation capability that the terminal supports to use in the connected state, the terminal reports the measurement relaxation capability information.

FIG. 3 is a schematic flowchart showing a communication method based on a measurement relaxation mechanism according to an illustrative embodiment. The communication method based on the measurement relaxation mechanism may be performed alone or in combination with other embodiments of the present disclosure. As shown in FIG. 3, the communication method based on the measurement relaxation mechanism is performed by a terminal and includes the following steps.

In step S21, measurement relaxation capability information is determined. The measurement relaxation capability information is configured to indicate an RRM measurement relaxation capability that the terminal supports to use.

In step S22, the measurement relaxation capability information is reported.

In embodiments of the present disclosure, a terminal that supports a measurement relaxation criterion reports the measurement relaxation capability information to the network device in the connected state to interact with the network device and use the measurement relaxation mechanism.

In an implementation, the terminal may report the measurement relaxation capability information using one or a combination of following manners.

In manner 1, the measurement relaxation capability information is reported via a terminal radio capability message.

In the present disclosure, the measurement relaxation capability may be used as a kind of terminal radio capability (terminal capability). When the network device sends a terminal capability enquiry message to the terminal to obtain the radio capability, a terminal that supports the measurement relaxation capability will carry a measurement relaxation capability indication (i.e., the measurement relaxation capability information) in a terminal capability information message and report it to the network device.

In manner 2, the measurement relaxation capability information is reported via initialization assistance information.

In embodiments of the present disclosure, the measurement relaxation capability may be used as a kind of terminal assistance information. A terminal with the measurement relaxation capability initializes an assistance information reporting process and reports the type of measurement relaxation criterion supported (i.e., the measurement relaxation capability information).

In manner 3, the measurement relaxation capability information is reported via message 5 in an RRC connection setup process or an RRC connection resume process.

In embodiments of the present disclosure, the terminal may carry the measurement relaxation capability indication (i.e., the measurement relaxation capability information) in the message 5 (msg5), such as an RRC setup complete/RRC resume complete message, in the RRC connection setup process/RRC connection resume process, to report the measurement relaxation capability information to the network device.

In manner 4, the measurement relaxation capability information is reported via message 3 in an RRC connection setup process or an RRC connection resume process.

In embodiments of the present disclosure, the terminal may carry the measurement relaxation capability indication (i.e., the measurement relaxation capability information) in the message 3 (msg3), such as an RRC setup request/RRC resume request/RRC resume request!, in the RRC connection setup process/RRC connection resume process, to report the measurement relaxation capability information to the network device.

In embodiments of the present disclosure, in another implementation, the measurement relaxation capability information is configured to indicate the RRM measurement relaxation capability that the terminal supports to use in a non-connected state. In an example, the stationary criterion may be indicated for a terminal in the non-connected state.

In embodiments of the present disclosure, the terminal may obtain measurement relaxation parameters provided by the network device, and use RRM measurement relaxation parameters provided by the network device to perform an RRM measurement relaxation.

In embodiments of the present disclosure, the terminal may obtain the measurement relaxation parameters provided by the network device through a system broadcast message. A terminal that supports the measurement relaxation uses parameters corresponding to the measurement relaxation capability in the system broadcast message to perform a decision of a corresponding RRM measurement relaxation criterion. When the measurement relaxation criterion is satisfied, the terminal reports this state to the network device. A terminal in the connected state or a terminal in the non-connected state may obtain the measurement relaxation parameters provided by the network device through the system broadcast message. That is, the terminal in the connected state or the terminal in the non-connected state may obtain the measurement relaxation parameters configured by the network device based on the system broadcast message broadcasted by the network device, and determine the measurement relaxation parameters corresponding to the measurement relaxation capacity information supported by itself from the measurement relaxation parameters configured by the network device.

In embodiments of the present disclosure, the terminal may obtain the measurement relaxation parameters provided by the network device through an RRC dedicated signaling, and use corresponding measurement relaxation parameters to perform the RRM measurement relaxation.

In an implementation of embodiments of the present disclosure, in response to determining that the terminal supports to use the RRM measurement relaxation, the RRM measurement relaxation is performed based on the measurement relaxation parameters in the connected state.

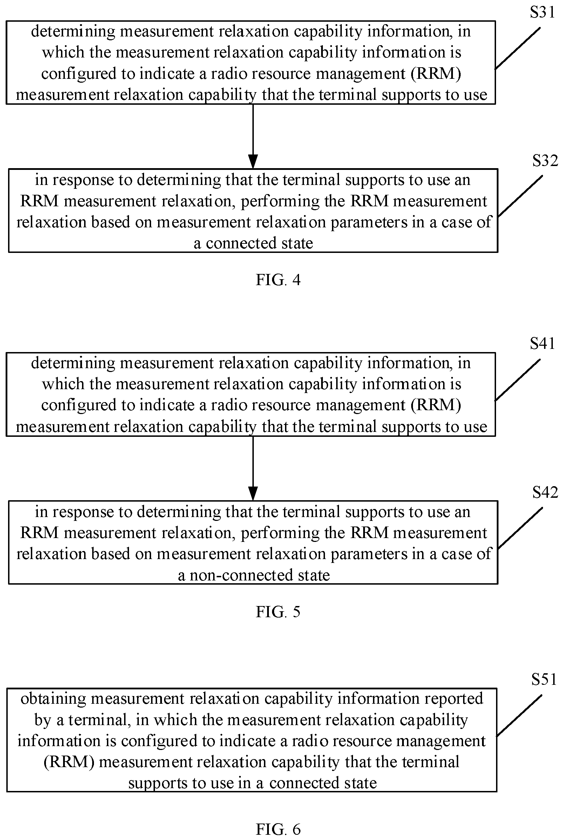

FIG. 4 is a schematic flowchart showing a communication method based on a measurement relaxation mechanism according to an illustrative embodiment. The communication method based on the measurement relaxation mechanism may be performed alone or in combination with other embodiments of the present disclosure. As shown in FIG. 4, the communication method based on the measurement relaxation mechanism is performed by a terminal and includes the following steps.

In step S31, measurement relaxation capability information is determined. The measurement relaxation capability information is configured to indicate a radio resource management (RRM) measurement relaxation capability that the terminal supports to use.

In step S32, in response to determining that the terminal supports to use an RRM measurement relaxation, the RRM measurement relaxation is performed based on measurement relaxation parameters in a case of a connected state.

In embodiments of the present disclosure, after a terminal that supports a measurement relaxation criterion reports the measurement relaxation capability information to the network device in the connected state, the network device configures the measurement relaxation parameters corresponding to the measurement relaxation capability information according to the measurement relaxation capability information. In the connected state, the terminal that supports to use the RRM measurement relaxation capability may obtain the measurement relaxation parameters corresponding to the measurement relaxation capability information configured and provided by the network device. The terminal that supports the measurement relaxation capability may use the RRM measurement relaxation parameters corresponding to the measurement relaxation capability information configured and provided by the network device to perform the RRM measurement relaxation in the connected state.

In embodiments of the present disclosure, for the case where the terminal supports the measurement relaxation criterion and is in the connected state, and there is no need to report the measurement relaxation capability information to the network device, the terminal may also use the RRM measurement relaxation parameters provided by the network to perform the RRM measurement relaxation.

In an example, the network device provides the measurement relaxation parameters through a system broadcast message. The terminal that supports the measurement relaxation uses parameters corresponding to the measurement relaxation capability in the system broadcast message to perform a decision of a corresponding RRM measurement relaxation criterion. When the measurement relaxation criterion is satisfied, the terminal reports this state (the RRM measurement relaxation criterion performed) to the network device.

In another example, the network device provides the measurement relaxation parameters through an RRC dedicated signaling, and the terminal that supports the measurement relaxation obtains the measurement relaxation parameters and uses corresponding measurement relaxation parameters to perform the RRM measurement relaxation.

In another implementation of embodiments of the present disclosure, in response to determining that the terminal supports to use the RRM measurement relaxation, the RRM measurement relaxation is performed based on the measurement relaxation parameters in a case of a non-connected state.

FIG. 5 is a schematic flowchart showing a communication method based on a measurement relaxation mechanism according to an illustrative embodiment. The communication method based on the measurement relaxation mechanism may be performed alone or in combination with other embodiments of the present disclosure. As shown in FIG. 5, the communication method based on the measurement relaxation mechanism is performed by a terminal and includes the following steps.

In step S41, measurement relaxation capability information is determined. The measurement relaxation capability information is configured to indicate a radio resource management (RRM) measurement relaxation capability that the terminal supports to use.

In step S42, in response to determining that the terminal supports to use an RRM measurement relaxation, the RRM measurement relaxation is performed based on measurement relaxation parameters in a case of a non-connected state.

In an example, the network device provides the measurement relaxation parameters through a system broadcast message. A terminal that supports the measurement relaxation uses parameters corresponding to the measurement relaxation capability in the system broadcast message to perform a decision of a corresponding RRM measurement relaxation criterion. When the measurement relaxation criterion is satisfied, the relaxation measurement is performed autonomously.

In embodiments of the present disclosure, a terminal that supports the measurement relaxation criterion may use the measurement relaxation parameters provided by the network device to perform the RRM measurement relaxation in the non-connected state.

In the above embodiments of the present disclosure, based on the measurement relaxation capability information, when the terminal determines that conditions for performing the measurement relaxation are met in the connected state or the non-connected state, the terminal performs the RRM measurement relaxation.

In embodiments of the present disclosure, if the terminal determines that the conditions for performing the measurement relaxation are not met, the terminal does not perform the RRM measurement relaxation.

The terminal not meeting the conditions for performing the measurement relaxation includes that for example, the terminal does not support to use the RRM measurement relaxation, and/or the terminal does not obtain the measurement relaxation parameters.

In embodiments of the present disclosure, for a terminal that does not support the measurement relaxation capability, the RRM measurement relaxation mechanism is not allowed to be used.

In an embodiment, regarding a manner for the terminal to report the measurement relaxation capability information, a terminal in the connected state that does not support the measurement relaxation capability is not allowed to use the measurement relaxation parameters broadcasted by a system message to perform the decision of the measurement relaxation criterion.

In another embodiment, regarding a manner for the terminal to report the measurement relaxation capability information, for a terminal in the connected state that does not support the measurement relaxation capability, the network device will not configure the measurement relaxation parameters for the terminal via an RRC dedicated signaling, that is, the terminal is not allowed to perform the decision of the measurement relaxation criterion.

In another embodiment, regarding a manner for the terminal to report the measurement relaxation capability information, for a terminal in the connected state that does not support the measurement relaxation capability, even if the network device configures the measurement relaxation parameters for the terminal via an RRC dedicated signaling, the terminal is not allowed to perform the decision of the measurement relaxation criterion.

In another embodiment, for the case where the terminal does not need to report the measurement relaxation capability information, a terminal that does not support the measurement relaxation capability (for all RRC states) is not allowed to use the measurement relaxation parameters broadcasted by a system message to perform the decision of the measurement relaxation criterion.

In another embodiment, for the case where the terminal does not need to report the measurement relaxation capability information, for a terminal that does not support the measurement relaxation capability, even if the network device configures the measurement relaxation parameters for the terminal via an RRC dedicated signaling, the terminal is not allowed to perform the decision of the measurement relaxation criterion.

In embodiments of the present disclosure, the RRM measurement relaxation mechanism is not allowed to be used by a terminal that does not obtain the measurement relaxation parameters provided by the network device.

In embodiments of the present disclosure, if the network device does not provide measurement relaxation criterion parameters, the RRM measurement relaxation mechanism is not allowed to be used by a terminal regardless of whether the terminal has the measurement relaxation capability.

In an embodiment, for a manner where the measurement relaxation parameters are sent by the network device through a system broadcast message, if the network does not provide the measurement relaxation parameters required by the terminal in the system broadcast message, the terminal will not perform the RRM measurement relaxation mechanism regardless of whether the terminal has the measurement relaxation capability.

In another embodiment, for a terminal that reports the measurement relaxation capability information through the assistance information, if the terminal does not receive the measurement relaxation parameters provided by the network device through an RRC dedicated signaling, the terminal does not perform the RRM measurement relaxation mechanism.

In another embodiment, for a terminal that reports the measurement relaxation capability information through an extended assistance information, if the terminal does not receive the measurement relaxation parameters provided by the network device through an RRC dedicated signaling, the terminal does not perform the RRM measurement relaxation mechanism.

In embodiments of the present disclosure, in case that the conditions for performing the measurement relaxation are not met (either it is determined by the terminal after performing an RRM measurement, or the network does not configure the measurement relaxation parameters), the UE will not perform the RRM measurement relaxation.

In embodiments of the present disclosure, the terminal may obtain the RRM measurement relaxation parameters in two manners:
1. an RRC dedicated signaling notification manner; and
2. a system message broadcast notification manner.

The RRC dedicated signaling notification manner is unique to terminals in the connected state, and a certain terminal may be notified with this manner. For the system message broadcast notification manner, the network device will not notify a certain terminal, but notify all terminals in a cell to provide parameters for the use of the RRM measurement relaxation.

Furthermore, after the terminal determines the measurement relaxation capability information, there are two options:
1. reporting the measurement relaxation capability information; and
2. no need to report the measurement relaxation capability information, and the terminal determines whether to use the measurement relaxation mechanism autonomously.

A terminal in the non-connected state cannot report the measurement relaxation capability information to the network device, so it can only adopt the option of no need to report the measurement relaxation capability information. A terminal in the connected state may use any of the above two options to indicate the capability.

It may be understood that in embodiments of the present disclosure, for a terminal in the connected state, it may report the measurement relaxation capability information, and interact with the network device to determine whether to perform the measurement relaxation.

Based on the same concept, embodiments of the present disclosure also provide a communication method based on a measurement relaxation mechanism performed by a network device.

FIG. 6 is a schematic flowchart showing a communication method based on a measurement relaxation mechanism according to an illustrative embodiment. The communication method based on the measurement relaxation mechanism may be performed alone or in combination with other embodiments of the present disclosure. As shown in FIG. 6, the communication method based on the measurement relaxation mechanism is performed by a terminal and includes a following step.

In step S51, measurement relaxation capability information reported by a terminal is obtained. The measurement relaxation capability information is configured to indicate a radio resource management (RRM) measurement relaxation capability that the terminal supports to use in a connected state.

In an implementation, the measurement relaxation capability may also be understood as whether a measurement relaxation criterion is supported, that is, the measurement relaxation capability information determined by the terminal may be configured to indicate whether the terminal supports an RRM measurement relaxation criterion in a non-connected state or a connected state.

In embodiments of the present disclosure, the measurement relaxation capability of the terminal may include, but is not limited to, following types of measurement relaxation criterion: supporting all measurement relaxation criteria; supporting a non-cell edge criterion; supporting a low mobility criterion; supporting a stationary criterion; supporting a non-cell edge criterion and/or supporting a low mobility criterion; supporting a non-cell edge criterion and/or supporting a stationary criterion; supporting a non-cell edge criterion, and/or supporting a low mobility criterion and/or a stationary criterion; or not supporting any measurement relaxation criterion.

Further, the network device may adopt at least one of the following manners to obtain the measurement relaxation capability information reported by the terminal:
manner 1: obtaining the measurement relaxation capability information reported by the terminal based on a terminal radio capability message; or
manner 2: obtaining the measurement relaxation capability information reported by the terminal based on initialization assistance information; or
manner 3: obtaining the measurement relaxation capability information reported by the terminal based on message 5 in an RRC connection setup process or an RRC connection resume process; or
manner 4: obtaining the measurement relaxation capability information reported by the terminal based on message 3 in an RRC connection setup process or an RRC connection resume process.

In embodiments of the present disclosure, the network device may send measurement relaxation parameters, so that the terminal uses RRM measurement relaxation parameters provided by the network device to perform an RRM measurement relaxation.

The network device may send the measurement relaxation parameters corresponding to the measurement relaxation capability information configured by the network device based on an RRC dedicated signaling. The network device may also send the measurement relaxation parameters configured by the network device via a system broadcast message broadcasted by the network device.

It may be understood that measurement relaxation criterion information configured and sent by the network device is similar to an implementation process where the terminal performs the measurement relaxation mechanism in the connected state as described in the above embodiments, and reference may be made to the relevant descriptions in the above embodiments for details, which will not be elaborated here.

It may be further understood that the communication method based on the measurement relaxation mechanism according to embodiments of the present disclosure may be applicable to a scenario where the terminal and the network device interact to perform the communication method based on the measurement relaxation mechanism. For the functions implemented by the terminal and the network device involved in the specific implementation process, reference may be made to the relevant descriptions involved in the above embodiments, which will not be described in detail here.

It should be noted that those skilled in the art may understand that the various implementations/embodiments mentioned above in embodiments of the present disclosure may be used in conjunction with the foregoing embodiments or may be used independently. Whether used alone or in conjunction with the foregoing embodiments, the implementation principles are similar. In implementations of the present disclosure, some embodiments are described in terms of implementations used together. Of course, those skilled in the art may understand that such illustrations do not limit embodiments of the present disclosure.

Based on the same concept, embodiments of the present disclosure also provide a communication apparatus based on a measurement relaxation mechanism.

It may be understood that, in order to implement the above-mentioned functions, the communication apparatus based on the measurement relaxation mechanism according to embodiments of the present disclosure includes corresponding hardware structures and/or software modules for performing various functions. Embodiments of the present disclosure may be implemented in a form of hardware or a combination of hardware and computer software in combination with units and algorithm steps of each example disclosed in embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of embodiments of the present disclosure.

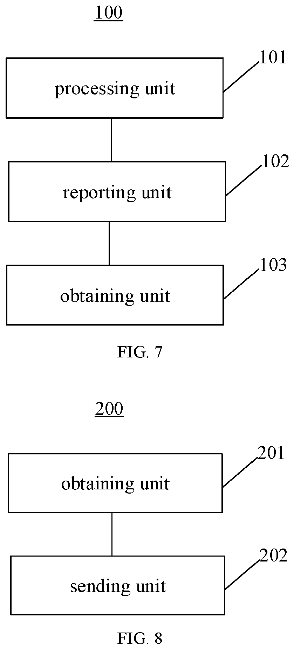

FIG. 7 is a schematic block diagram showing a communication apparatus based on a measurement relaxation mechanism according to an illustrative embodiment. Referring to FIG. 7, the communication apparatus 100 based on the measurement relaxation mechanism is applied to a terminal and includes a processing unit 101.

The processing unit 101 is configured to determine measurement relaxation capability information. The measurement relaxation capability information is configured to indicate a radio resource management (RRM) measurement relaxation capability that the terminal supports to use.

In an embodiment, the RRM measurement relaxation capability includes one of:
supporting all measurement relaxation criteria;
supporting a non-cell edge criterion;
supporting a low mobility criterion;
supporting a stationary criterion;
supporting a non-cell edge criterion and/or supporting a low mobility criterion;
supporting a non-cell edge criterion and/or supporting a stationary criterion;
supporting a non-cell edge criterion, and/or supporting a low mobility criterion and/or a stationary criterion; or
not supporting any measurement relaxation criterion.

In an embodiment, the measurement relaxation capability information is configured to indicate the RRM measurement relaxation capability that the terminal supports to use in a connected state.

In an embodiment, the measurement relaxation capability information is configured to indicate the RRM measurement relaxation capability that the terminal supports to use in the connected state. The communication apparatus 100 based on the measurement relaxation mechanism further includes a reporting unit 102 configured to: report the measurement relaxation capability information.

In an embodiment, the reporting unit 102 reports the measurement relaxation capability information in following manners:
reporting the measurement relaxation capability information via a terminal radio capability message; or
reporting the measurement relaxation capability information via initialization assistance information; or
reporting the measurement relaxation capability information via message 5 in an RRC connection setup process or an RRC connection resume process; or
reporting the measurement relaxation capability information via message 3 in an RRC connection setup process or an RRC connection resume process.

In an embodiment, the measurement relaxation capability information is configured to indicate the RRM measurement relaxation capability that the terminal supports to use in a non-connected state.

In an embodiment, the communication apparatus 100 based on the measurement relaxation mechanism further includes an obtaining unit 103. The obtaining unit 103 is configured to: obtain measurement relaxation parameters configured by a network device.

In an embodiment, the measurement relaxation capability information is configured to indicate the RRM measurement relaxation capability that the terminal supports to use in the connected state. The obtaining unit 103 obtains the measurement relaxation parameters corresponding to the measurement relaxation capability information configured by the network device based on a radio control resource dedicated signaling.

In an embodiment, the obtaining unit 103 obtains the measurement relaxation parameters configured by the network device based on a system broadcast message broadcasted by the network device, and determines the measurement relaxation parameters corresponding to the measurement relaxation capability information from the measurement relaxation parameters configured.

In an embodiment, the processing unit 101 is further configured to: in response to determining that the terminal supports to use an RRM measurement relaxation, perform the RRM measurement relaxation based on the measurement relaxation parameters in the connected state.

In an embodiment, the processing unit 101 is further configured to: in response to determining that the terminal supports to use an RRM measurement relaxation, perform the RRM measurement relaxation based on the measurement relaxation parameters in the non-connected state.

In an embodiment, the processing unit 101 is further configured to: in response to determining that the terminal does not support to use an RRM measurement relaxation, and/or determining that measurement relaxation parameters are not obtained, not perform the RRM measurement relaxation.

FIG. 8 is a schematic block diagram showing a communication apparatus based on a measurement relaxation mechanism according to an illustrative embodiment. Referring to FIG. 8, the communication apparatus 200 based on the measurement relaxation mechanism is applied to a network device and includes an obtaining unit 201.

The obtaining unit 201 is configured to obtain measurement relaxation capability information reported by a terminal. The measurement relaxation capability information is configured to indicate a radio resource management (RRM) measurement relaxation capability that the terminal supports to use in a connected state.

In an embodiment, the RRM measurement relaxation capability includes one of:
supporting all measurement relaxation criteria;
supporting a non-cell edge criterion;
supporting a low mobility criterion;
supporting a stationary criterion;
supporting a non-cell edge criterion and/or supporting a low mobility criterion;
supporting a non-cell edge criterion and/or supporting a stationary criterion;
supporting a non-cell edge criterion, and/or supporting a low mobility criterion and/or a stationary criterion; or
not supporting any measurement relaxation criterion.

In an embodiment, the obtaining unit 201 obtains the measurement relaxation capability information reported by the terminal based on a terminal radio capability message; or obtains the measurement relaxation capability information reported by the terminal based on initialization assistance information; or obtains the measurement relaxation capability information reported by the terminal based on message 5 in an RRC connection setup process or an RRC connection resume process; or obtains the measurement relaxation capability information reported by the terminal based on message 3 in an RRC connection setup process or an RRC connection resume process.

In an embodiment, the communication apparatus 200 based on the measurement relaxation mechanism further includes a sending unit 202. The sending unit 202 is configured to: send measurement relaxation parameters.

In an embodiment, the sending unit 202 sends the measurement relaxation parameters corresponding to the measurement relaxation capability information configured by the network device via a radio control resource dedicated signaling.

In an embodiment, the sending unit 202 sends the measurement relaxation parameters configured by the network device via a system broadcast message broadcasted by the network device.

With respect to the apparatus in the above embodiments, the specific manners for individual modules to perform operations have been described in detail in embodiments regarding the methods, which will not be elaborated herein.

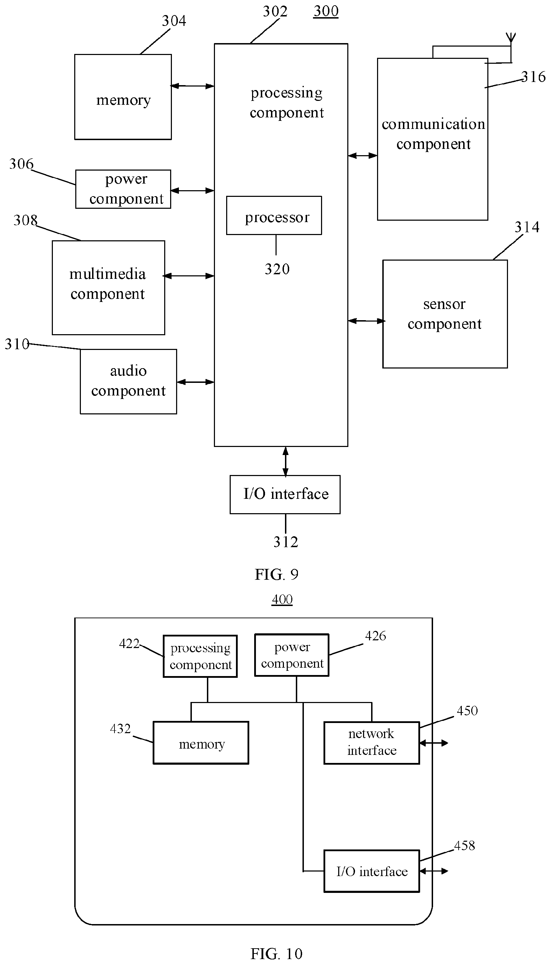

FIG. 9 is a schematic block diagram showing a communication device for a measurement relaxation mechanism according to an illustrative embodiment. For example, the device 300 can be a mobile phone, a computer, a digital broadcast terminal, a messaging device, a game console, a tablet device, a medical device, a fitness device, a personal digital assistant, or the like.

Referring to FIG. 9, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 can include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300. The sensor component 314 may also detect a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 can access a wireless network based on a communication standard, such as WiFi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In an illustrative embodiment, there is also provided a non-transitory computer readable storage medium including instructions, such as included in the memory 304, executable by the processor 320 in the device 300, for completing the above-mentioned method. For example, the non-transitory computer-readable storage medium may be a ROM, a random access memory (RAM), a CD-ROM, a magnetic tape, a floppy disc, an optical data storage device, and the like.

FIG. 10 is a schematic block diagram showing a communication device for a measurement relaxation mechanism according to an illustrative embodiment. For example, the device 400 may be provided as a network device. Referring to FIG. 10, the device 400 includes a processing component 422, which further includes one or more processors, and a memory resource represented by a memory 432 configured to store instructions executable by the processing component 422, such as application programs. The application programs stored in the memory 432 may include one or more modules each corresponding to a set of instructions. In addition, the processing component 422 is configured to execute instructions to perform the above-mentioned method.

The device 400 may also include a power component 426 configured to perform the power management of the device 400, a wired or wireless network interfaces 450 configured to connect the device 400 to a network, and an input-output (I/O) interface 458. The device 400 may operate based on an operating system stored in the memory 432, such as Windows ServerTM, Mac OS XTM, UnixTM, LinuxTM, FreeBSDTM, or the like.

In an illustrative embodiment, there is also provided a non-transitory computer readable storage medium including instructions, such as included in the memory 432, executable by the processing component 422 in the device 400, for completing the above-mentioned method. For example, the non-transitory computer-readable storage medium may be a ROM, a random access memory (RAM), a CD-ROM, a magnetic tape, a floppy disc, an optical data storage device, and the like.

It is further understood that "a plurality of" in this disclosure refers to two or more, and other quantifiers are similar thereto. The term "and/or" describes an associated relationship of associated objects, and means that there may be three relationships. For example, the expression of A and/or B indicates three cases, i.e., A exists alone, A and B exist at the same time, and B exists alone. The character "j" generally indicates that contextual objects are in an "or" relationship. "Alan", "said" and "the" in singular forms are intended to include plural forms, unless clearly indicated in the context otherwise.

It is further understood that terms such as "first", and "second" are used to describe various information, but these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations in embodiments of the present disclosure are described in a specific order in the accompanying drawings, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A communication method based on a measurement relaxation mechanism, performed by a terminal, comprising:
determining measurement relaxation capability information, wherein the measurement relaxation capability information is configured to indicate a radio resource management (RRM) measurement relaxation capability that the terminal supports to use.

2. The communication method based on the measurement relaxation mechanism according to claim 1, wherein the RRM measurement relaxation capability comprises one of:
supporting all measurement relaxation criteria;
supporting a non-cell edge criterion;
supporting a low mobility criterion;
supporting a stationary criterion;
supporting a non-cell edge criterion and/or supporting a low mobility criterion;
supporting a non-cell edge criterion and/or supporting a stationary criterion;
supporting a non-cell edge criterion, and/or supporting a low mobility criterion and/or a stationary criterion; or
not supporting any measurement relaxation criterion.

3. The communication method based on the measurement relaxation mechanism according to claim 1 or 2, wherein the measurement relaxation capability information is configured to indicate the RRM measurement relaxation capability that the terminal supports to use in a connected state.

4. The communication method based on the measurement relaxation mechanism according to claim 3, further comprising:
reporting the measurement relaxation capability information.

5. The communication method based on the measurement relaxation mechanism according to claim 4, wherein reporting the measurement relaxation capability information comprises:
reporting the measurement relaxation capability information via a terminal radio capability message; or
reporting the measurement relaxation capability information via initialization assistance information; or
reporting the measurement relaxation capability information via message 5 in a radio resource control connection setup process or a radio resource control connection resume process; or
reporting the measurement relaxation capability information via message 3 in a radio resource control connection setup process or a radio resource control connection resume process.

6. The communication method based on the measurement relaxation mechanism according to claim 1 or 2, wherein the measurement relaxation capability information is configured to indicate the RRM measurement relaxation capability that the terminal supports to use in a non-connected state.

7. The communication method based on the measurement relaxation mechanism according to claim 3 or 6, further comprising:
obtaining measurement relaxation parameters configured by a network device.

8. The communication method based on the measurement relaxation mechanism according to claim 7, wherein the measurement relaxation capability information is configured to indicate the RRM measurement relaxation capability that the terminal supports to use in the connected state; and
obtaining the measurement relaxation parameters configured by the network device comprises:
obtaining the measurement relaxation parameters corresponding to the measurement relaxation capability information configured by the network device based on a radio control resource dedicated signaling.

9. The communication method based on the measurement relaxation mechanism according to claim 7, wherein obtaining the measurement relaxation parameters configured by the network device comprises:
obtaining the measurement relaxation parameters configured by the network device based on a system broadcast message broadcasted by the network device, and determining the measurement relaxation parameters corresponding to the measurement relaxation capability information from the measurement relaxation parameters configured.

10. The communication method based on the measurement relaxation mechanism according to any one of claims 7 to 9, further comprising:
in response to determining that the terminal supports to use an RRM measurement relaxation, performing the RRM measurement relaxation based on the measurement relaxation parameters in the connected state.

11. The communication method based on the measurement relaxation mechanism according to claim 7 or 9, further comprising:
in response to determining that the terminal supports to use an RRM measurement relaxation, performing the RRM measurement relaxation based on the measurement relaxation parameters in the non-connected state.

12. The communication method based on the measurement relaxation mechanism according to claim 1, further comprising:
in response to determining that the terminal does not support to use an RRM measurement relaxation, and/or determining that measurement relaxation parameters are not obtained, not performing the RRM measurement relaxation.

13. A communication method based on a measurement relaxation mechanism, performed by a network device and comprising:
obtaining measurement relaxation capability information reported by a terminal, wherein the measurement relaxation capability information is configured to indicate a radio resource management (RRM) measurement relaxation capability that the terminal supports to use in a connected state.

14. The communication method based on the measurement relaxation mechanism according to claim 13, wherein the RRM measurement relaxation capability comprises one of:
supporting all measurement relaxation criteria;
supporting a non-cell edge criterion;
supporting a low mobility criterion;
supporting a stationary criterion;
supporting a non-cell edge criterion and/or supporting a low mobility criterion;
supporting a non-cell edge criterion and/or supporting a stationary criterion;
supporting a non-cell edge criterion, and/or supporting a low mobility criterion and/or a stationary criterion; or
not supporting any measurement relaxation criterion.

15. The communication method based on the measurement relaxation mechanism according to claim 13, wherein obtaining the measurement relaxation capability information reported by the terminal comprises:
obtaining the measurement relaxation capability information reported by the terminal via a terminal radio capability message; or
obtaining the measurement relaxation capability information reported by the terminal via initialization assistance information; or
obtaining the measurement relaxation capability information reported by the terminal via message 5 in a radio resource control connection setup process or a radio resource control connection resume process; or
obtaining the measurement relaxation capability information reported by the terminal via message 3 in a radio resource control connection setup process or a radio resource control connection resume process.

16. The communication method based on the measurement relaxation mechanism according to claim 13, further comprising:
sending measurement relaxation parameters.

17. The communication method based on the measurement relaxation mechanism according to claim 16, wherein sending the measurement relaxation parameters comprises:
sending the measurement relaxation parameters corresponding to the measurement relaxation capability information configured by the network device via a radio control resource dedicated signaling.

18. The communication method based on the measurement relaxation mechanism according to claim 16, wherein sending the measurement relaxation parameters comprises:
sending the measurement relaxation parameters configured by the network device via a system broadcast message broadcasted by the network device.

19. A communication apparatus based on a measurement relaxation mechanism, comprising:
a processing unit configured to determine measurement relaxation capability information, wherein the measurement relaxation capability information is configured to indicate a radio resource management (RRM) measurement relaxation capability that a terminal supports to use.

20. The communication apparatus based on the measurement relaxation mechanism according to claim 19, wherein the measurement relaxation capability information is configured to indicate the RRM measurement relaxation capability that the terminal supports to use in a connected state; and
the communication apparatus based on the measurement relaxation mechanism further comprises a reporting unit configured to report the measurement relaxation capability information.

21. A communication apparatus based on a measurement relaxation mechanism, applied to a network device and comprising:
an obtaining unit configured to obtain measurement relaxation capability information reported by a terminal, wherein the measurement relaxation capability information is configured to indicate a radio resource management (RRM) measurement relaxation capability that the terminal supports to use in a connected state.

22. A communication device based on a measurement relaxation mechanism, comprising:
a processor; and
a memory configured to store a processor-executable instruction;
wherein the processor is configured to: perform the communication method based on the measurement relaxation mechanism according to any one of claims 1 to 12, or perform the communication method based on the measurement relaxation mechanism according to any one of claims 13 to 18.

23. A storage medium having stored therein instructions that, when executed by a processor of a terminal, cause the terminal to perform the communication method based on the measurement relaxation mechanism according to any one of claims 1 to 12, or when executed by a processor of a network device, cause the network device to perform the communication method based on the measurement relaxation mechanism according to any one of claims 13 to 18.
